# EUROPEAN PATENT SPECIFICATION

(11) **EP 2 909 030 B1**
(45) Date of publication and mention of the grant of the patent: **09.09.2020**
(21) Application number: 13821951.4
(22) Date of filing: 21.10.2013
(51) Int. Cl.: B32B 25/08, B32B 25/10, B32B 27/34, B32B 1/08, F16L 11/08

(54) **MULTILAYER HOSE FOR VEHICLE AIR CONDITIONING SYSTEM**
MEHRSCHICHTSCHLAUCH FÜR FAHRZEUGKLIMAANLAGE
TUYAU MULTICOUCHE POUR SYSTÈME DE CLIMATISATION DE VÉHICULE

(30) Priority: 19.10.2012 IT TO20120926
(43) Date of publication of application: 26.08.2015
(73) Proprietor: SUMIRIKO ITALY S.P.A., 10123 Torino (IT)
(72) Inventor: CARRANO, Arturo, I-65121 Pescara (IT); ZANARDI, Mariofelice, I-10123 Torino (IT)
(74) Representative: Fiussello, Francesco
(86) International application number: PCT/IB2013/059517
(87) International publication number: WO 2014/061003

(56) References cited:
- EP-A1- 2 466 179
- WO-A1-2012/115147
- US-A1- 2012 012 222
- GAVENONIS ET AL: "Polyamide Resin Technologies for High Temperature and Automotive Chemical Exposure Environments", SAE TECHNICAL PAPER SERIES, SOCIETY OF AUTOMOTIVE ENGINEERS, WARRENDALE, PA, US, vol. 2009-01-1297, 2009, page 9pp, XP009170626, ISSN: 0148-7191, DOI: 10.4271/2009-01-1297
- "Avec le nouveau grade Rilsan HT "ultra flexible", Arkema repousse les standards de flexibilité des matériaux PPA", , 20 February 2012 (2012-02-20), XP055068628, F-92705 COLOMBES Cedex Retrieved from the Internet: URL:http://www.arkema.com/export/shared/.c ontent/media/downloads/news-attachments/gl obal/fr/press-release/2012/cp-ultra-flexib le-rilsan-ht-february-french.pdf [retrieved on 2013-06-27]

## Description

### TECHNICAL SECTOR

The present invention concerns a multilayer hose for transporting a coolant in vehicle air conditioning systems.

### PRIOR ART

In vehicle air conditioning systems 1,1,1,2-Tetrafluoroethane, also known as R-134a, is currently used as the coolant.

The latest standards for greenhouse gas reduction have resulted in a constant search for solutions with lower environmental impact. In particular said environmental impact is often measured as "global warming potential", also known as GWP.

In vehicle air conditioning systems, replacement of the coolant R134 with new solutions that have a much lower GWP such as, for example, HFO-1234yf or 2,3,3,3-Tetrafluoropropene or more generally various isomers of tetrafluoropropene, below identified and designated generically as tetrafluoropropenes, has therefore been proposed.

Alternatively the use of 1,3,3,3-Tetrafluoropropene, for example, also known as HFO-1234ze has also been proposed.

Specifically, the formula of HFO-1234yf is the following:

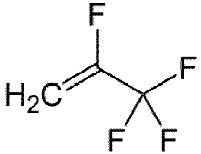

The GWP of HFO-1234yf is 335 times lower than R-134a and replacement of the R134a with said coolant is therefore very advantageous in environmental terms.

Coolants are generally used in combination with oils for the compressor known as PAG oils, an acronym of polyalkylene glycols, which are used to lubricate the air conditioning system and in particular the compressor.

The hoses used in vehicle air conditioning systems are generally made in several layers to perform different functions such as, for example, resistance to chemical attacks, barrier to penetration of the coolant, mechanical resistance and, in particular, resistance to high pressures.

The use of tetrafluoropropenes and, in particular, their use together with PAG oils entails a greater chemical aggression on the materials that form the hoses for transporting said fluids in the air conditioning system.

Furthermore in the air conditioning system there are often minimum percentages of water which, in addition to the coolant and the PAG oils, make resistance of the material in the ageing tests at high temperature particularly difficult.

There is therefore an ongoing search for new materials and new combinations of materials to form the relative layers for a hose which provides optimal results with the new coolants.

WO2012115147 discloses a polyamide resin composition is provided which contains an anti-aging agent together with a deterioration inhibitor, such as a metal compound or a silica-based inorganic compound, for preventing deterioration caused by, for example, an acid component or a halogen component contained in a refrigerant or an oil, and which satisfactorily produces an anti-aging effect expected by adding the anti-aging agent. For producing a polyamide resin composition containing an (a) polyamide resin, a (b) polyolefin-based elastomer, at least one (c) deterioration inhibitor selected from the group consisting of hydroxides, oxides and basic salts of divalent or trivalent metals, and silica-based inorganic compounds, and a (d) anti-aging agent, a mixture prepared by mixing and kneading the (c) deterioration inhibitor and (b) polyolefin-based elastomer and a mixture prepared by mixing and kneading the (a) polyamide resin and the (d) anti-aging agent are mixed and kneaded.

EP2466179 discloses a hose for refrigerant transport use comprising an inner layer with superior deterioration resistance performance. The innermost layer comprised in the hose for refrigerant transport use of the present invention is formed using a polyamide resin composition comprising a polyamide and, per 100 parts by mass thereof, from 0.5 to 20 parts by mass of an acid acceptor.

GAVENONIS ET AL: "Polyamide Resin Technologies for high Temperature and automotive Chemical Exposure Environments", SAE TECHNICAL PAPER SERIES, SOCIETY OF AUTOMOTIVE ENGINEERS, WARRENDALE, PA, US, vol. 2009-01-1297, page 9pp discloses different polyamides for use with coolants "Avec le nouveus grade Rilsan HT "ultra flexible", Arkem repousse les standards de flexibilitè des materiaux PPA", 20 February 2012

US2012012222 discloses a fuel hose includes a tube-shaped inner layer made of a resin composition (A) that contains an aromatic polyamide resin as a main component and an organic acid salt having 8 to 28 carbon atoms and an outer layer formed on an outer peripheral surface of the inner layer and made of a resin composition (B) that contains an aliphatic polyamide resin as a main component, wherein the inner layer and the outer layer are bonded to each other through interlayer adhesion.

### SUBJECT OF THE INVENTION

A first object of the present invention is therefore to obtain a multilayer hose for a vehicle air conditioning system which can withstand the chemical aggression also of all the PAG oils and has optimal barrier properties, is inexpensive to produce, has optimal resistance to low and high temperatures and withstands the very high operating pressures of said air conditioning systems.

A second object of the present invention is to produce a vehicle air conditioning system comprising at least one isomer of a tetrafluoropropene as coolant and at least one multilayer hose for transporting the tetrafluoropropene, in which the hose withstands the chemical aggression also of the PAG oils and has optimal barrier properties, is furthermore inexpensive to produce and has optimal resistance to low and high temperatures and withstands the very high operating pressures of said air conditioning systems.

According to the present invention said objects are attained by a multilayer hose as claimed in claim 1.

### BRIEF DESCRIPTION OF THE DRAWINGS

For a better understanding of the present invention, it is now described also with reference to the accompanying figures which illustrate:
- Figure 1 shows a schematic representation of a vehicle air conditioning system;
- Figure 2 shows a perspective view of a hose for transporting a coolant;

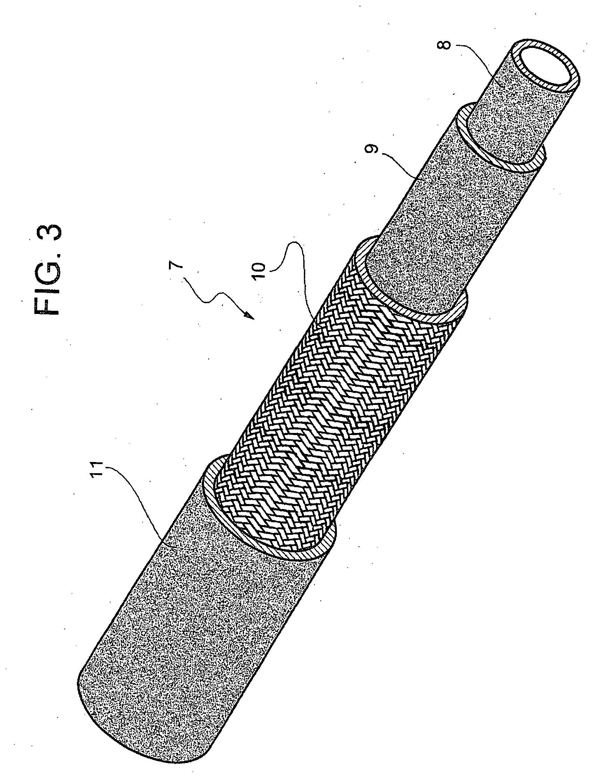

- Figure 3 shows a partial and schematic perspective view of a multilayer hose according to the present invention;
- Figure 4 is a table that illustrates hot ageing tests of a material to be used as an inner layer of a hose according to the present invention.

### DETAILED DISCLOSURE

In the context of the present invention, "PPA" indicates a semiaromatic polyamide or polyphtalamide or high performance polyamide, which comprises the following general repetitive unit:

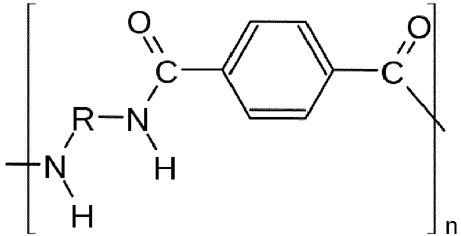

The PPAs of the present invention are also described in ASTM D5336.

Examples of PPA can, for example, advantageously have the following repetitive unit:

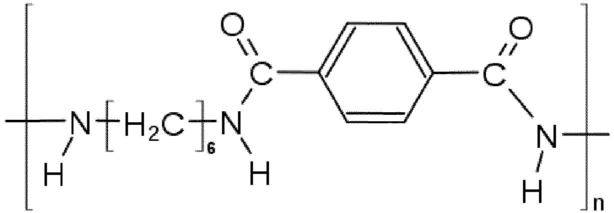

Examples of PPA are sold under the brands Amodel, Grivory, Ultramid T, VESTAMID HTplus and Zytel(r) HTN, Rilsan HT and Radipol XT.

It is particularly advantageous to use PPAs of vegetable origin and therefore of recyclable material due to their considerable environmental benefits, such as for example the PPAs in which the polyamine portion has 10 or 12 CH₂ chains.

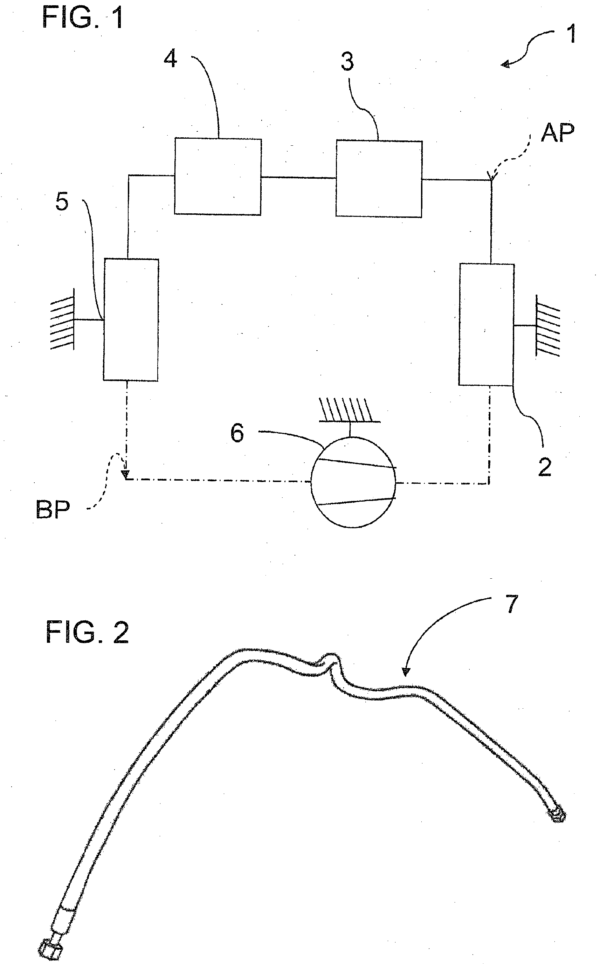

In Figure 1 the number 1 indicates as a whole a vehicle air conditioning system, comprising a condenser 2, a drier tank 3, an expansion system 4, an evaporator 5 and a compressor 6. A low pressure section BP is identified in Figure 1 by a dot-dash line. A continuous line indicates a high pressure section AP, identifiable substantially between the compressor 6 and the expansion system 4. The components of the air conditioning system schematised in Figure 1 are connected by at least one hose 8, an example of which is illustrated in Figure 2.

The air conditioning system according to the present invention uses as a coolant at least one isomer of a tetrafluoropropene, below designated for the sake of simplicity as "tetrafluoropropene".

The air conditioning system comprises at least one hose 7 for transporting the tetrafluoropropene, said hose 7 comprising at least one inner layer 8. The inner layer 8 is made entirely of PPA.

Rilsan HT by Arkema and Radipol XT proved to be particularly advantageous as PPAs.

Elastomerised PPA, i.e. PPA with the addition of an elastomer in a quantity preferably ranging from 5 to 30%, not falling under the materials for the presently claimed first inner layer, was particularly resistant to the chemical aggression of some PAGs.

According to the present invention, the hose 7 furthermore comprises at least one second layer 9 comprising a first elastomeric material. Advantageously the first elastomeric material comprises as main elastomer, i.e. present in over 50% by weight, an elastomer chosen from the group consisting of natural rubber, polychloroprene, acrylonitrile-butadiene (NBR) and related hydrogenated elastomers known as hydrogenated acrylonitrile-butadiene (HNBR) or hydrogenated acrylonitrile-butadiene zinc salts grafted with unsaturated carboxylic acid esters, polyisoprene, styrene-butadiene rubbers, ethylene-alpha-olefin elastomers, EPDM, polyurethane, fluorine elastomers, ethylene-acrylic elastomers (AEM), bromo butyl, chlorosulfonated polyethylene (CSM) or alkyl-chlorosulfonate, chlorinated polyethylene, epoxidized natural rubber, SBR, carboxylated NBR, carboxylated HNBR, ACM and mixtures of these compounds.

A second layer 9 comprising as first elastomeric material an ethylene-alpha-olefin based elastomer is particularly preferred and in particular EPDM is even more preferred.

The EPDM used can be chosen, for example, from Dow Nordel 3720, Dow Nordel 4520 or Versalis Dutral 4038.

Layers comprising resins comprising mixtures of EPDM with bromobutyl proved to be particularly advantageous. Advantageously the EPDM is present in the second layer 9 in a quantity ranging from 50 to 100 phr and the bromobutyl is present in a quantity ranging from 0 to 50 phr.

Bromobutyl X2 Lanxess can be used, for example, as bromobutyl.

Alternatively or in combination with the bromobutyl it is also advantageous to use a mixture comprising also CSM, in particular adding from 0 to 50 phr.

CSM Tosoh 530, CSM Tosoh 830, CSM Hailon 3570 and CM Tyrin 3630, for example, can be used as CSM.

CSM has the advantage of increasing the stability to ageing and has shown optimal results also as an adhesion promoter between the layers.

It is clear that in addition to the elastomeric materials that constitute the second layer 9, it can comprise further additives.

For example, maleinized polybutadiene can be added advantageously in a quantity ranging from 1 to 30 phr. Alternatively it is possible to add another coagent consisting of a dienic polymer with vinyl groups.

As a further additive it is advantageous to add a resin donor of methylols, particularly advantageously in a quantity ranging from 0.5 to 20 phr. Furthermore it is advantageous to add also a resorcinol formaldehyde based composition, more advantageously in a quantity ranging from 0.5 to 20 phr.

Clearly the first elastomeric material can also comprise further components such as carbon black, which is advantageously added in a quantity ranging from 5 to 150 phr, or plasticizers, which are advantageously added in a quantity ranging from 5 to 150 phr. Paraffin oil can be used as a plasticizer, for example.

Furthermore the second layer 9 comprising a first elastomeric material also comprises vulcanization agents such as, for example, peroxide compounds which are advantageously added in a quantity ranging from 1 to 15 phr. Dicumyl peroxide, for example, can be added as a vulcanization agent.

The adhesion between the inner layer 8 comprising PPA and the second layer 9 comprising an elastomeric material can also be favoured by the use of appropriate adhesive systems applied on the surfaces of the layers by means of immersion, spraying, painting or by means of surface plasma treatments.

It should be noted that according to the present invention the adhesive is not considered a layer, but only a material suitable for promoting adhesion between two layers.

The products sold as HPC®, Chemlok® and Chemosil®, for example, can be advantageously used as adhesive. In particular, Chelok 205, 207, 6253, 6254 or Chemosil 211, 411, 256 have proved to be particularly advantageous.

Above and therefore on the outside of the second layer 9 comprising a first elastomeric material, a reinforcement material 10 is arranged which preferably comprises yarns with high thermal and mechanical resistance to efficiently withstand the high pressures to which the air conditioning system is subject during use with tetrafluoropropene. Said reinforcement material 10 is also known as reinforcement yarn 10. A woven fabric or a jersey fabric is preferably used as reinforcement material comprising yarns with high thermal and mechanical resistance.

As yarns with high thermal and mechanical resistance, yarns comprising polyamide fibres are preferably used, more advantageously aromatic polyamide fibres, or polyester, PVA or rayon fibres, but alternatively it is also possible to use other yarns which are generally known as reinforcements for hoses or other rubber products such as belts. For example it is also possible to use fibreglass, carbon fibre or PBO. It is also possible to use hybrid yarns comprising at least two of the above-mentioned materials.

The hose according to the present invention furthermore comprises above and therefore on the outside of the reinforcement material a fourth covering layer 11.

The fourth covering layer 11 advantageously comprises a second elastomeric material.

The second elastomeric material is preferably identical or at least similar to the one used to form the first elastomeric material.

The second elastomeric material, present as the main elastomer, or present for over 50% by weight, is advantageously an elastomer chosen from the group consisting of natural rubber, polychloroprene, acrylonitrile-butadiene (NBR) and relative hydrogenated elastomers known as hydrogenated acrylonitrile-butadiene (HNBR) or hydrogenated acrylonitrile-butadiene zinc salts grafted with unsaturated carboxylic acid esters, polyisoprene, styrene-butadiene rubbers, ethylene-alpha-olefin elastomers, EPDM, polyurethane, fluorine elastomers, ethylene-acrylic elastomers (AEM), bromo butyl, chlorosulfonated polyethylene (CSM) or alkyl-chlorosulfonate, chlorinated polyethylene, epoxidized natural rubber, SBR, carboxylated NBR, carboxylated HNBR, ACM and mixtures of these compounds.

Outer fourth layers 11 comprising ethylene-alpha-olefin elastomers are particularly preferred and in particular EPDM is even more preferred.

The use of polymers comprising butyl units inside the fourth layer 11 is even more advantageous in terms of resistance to permeation.

It is advantageous to treat the covering layer 11 with protective treatments, in particular paints such as HNBR loaded with metals like aluminium, for example it is possible to use the products sold under the brand Enduralast.

Advantageously the second layer 9 is thicker than the first layer 9.

Advantageously the second layer 9 is thicker than the fourth layer 11.

Advantageously the second layer 9 has a thickness greater than 1 mm.

For the layers described above the following thicknesses are preferred: for the inner layer 8 between 0.25 and 0.35 mm, for the second layer 9 between 1 and 2 mm, for the reinforcement material 10 between 0.5 and 0.7 mm and for the fourth layer 11 between 0.8 and 1.5 mm.

The hoses 7 produced as described above were the only ones to pass the tests scheduled by the car manufacturers for air conditioning system hoses.

In particular it should be noted that only the specific combination of an inner layer consisting of PPA which withstands chemical aggression together with a second layer 9 outside the first layer comprising a first elastomeric material, a third layer 10 outside the second layer comprising a reinforcement yarn and a fourth layer 11 outside the reinforcement yarn comprising a second elastomeric material provides all the characteristics of resistance to pressure, mechanical resistance and resistance to chemical aggression so that it can be used in an air conditioning system comprising tetrafluoropropene.

The present invention will be described below by means of examples, but said examples are merely intended to illustrate the invention and it is clear that a person skilled in the art can modify the materials of the layers or add layers without departing from the scope of the present invention.

### Example 1

The resistance of samples of PPA to PAG oils and PAG oils combined with water was evaluated.

Plates of PPA and PA6 with thickness of 1 mm were measured and their resistance to high temperatures was measured by placing them in an oven at 150°C for 168 hours.

The measurements were performed by simple immersion of the plate in a bath of PAG oils and PAG oils with 2000 ppm of water to simulate the impurities of water present in the air conditioning system.

Said last test is the most critical one for long-term resistance of air conditioning hoses in air conditioning systems that use tetrafluoropropene as coolant.

In order to pass the ageing tests required by the car manufacturers, the material to be used in the first layer must pass the test with all possible PAGs.

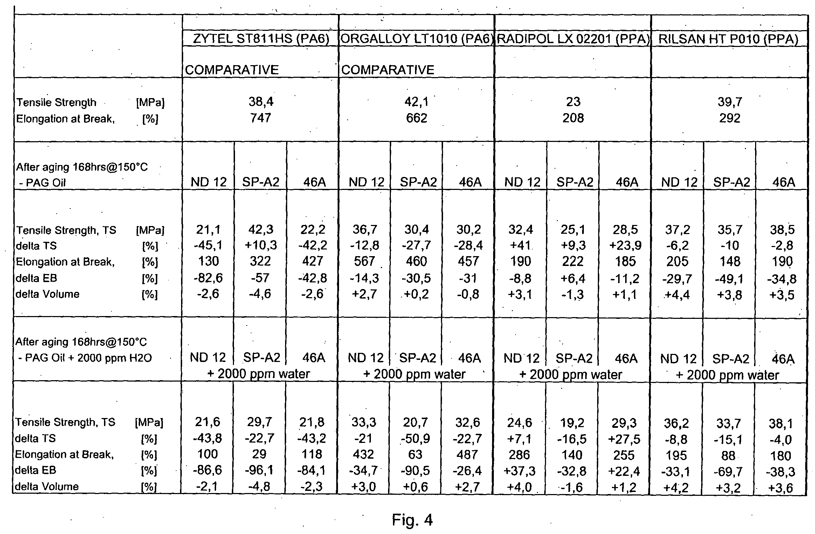

The results of the ageing test are shown in figure 4.

In the table, ND 12 is the PAG oil sold by Denso as Denso NB12, SP-A2 is the PAG oil sold by Sanden as Sanden SP-A2 and 46A is the PAG oil sold by Sunoco as Suniso 46A.

The test is considered passed if ageing is acceptable with all three types of PAG oil. In particular the PPA provides delta values of ultimate elongation after 168 hours at 150°C also in the presence of water (2000 ppm) greater than -70% and in two cases out of three greater than -50%.

It should be noted that the best results are obtained with Radipol LX02201 or, not in accordance with the present invention, with a PPA loaded with elastomers.

The comparison examples used plates of Polyamide 6 and it was verified that in these cases the ultimate elongation delta was even below -90%, thus making said material unusable in the specific application.

Said result is completely unexpected since the combination of PAG oils and water impurity results in a completely new chemical aggression for which there are no known data.

## Claims

1. An air conditioning system of a vehicle comprising tetrafluoropropene as cooling fluid, said system comprising a multilayer hose (7), tetrafluoropropene and a PAG oil, comprising at least:
- a first inner layer (8) consisting of PPA
- a second layer (9) external to the first layer comprising a first elastomeric material;
- a third layer (10) external to the second layer comprising a reinforcement yarn;
- a fourth layer (11) external to the reinforcement yarn comprising a second elastomeric material.

2. An air conditioning system according to claim 1, **characterized in that** said PPA comprises a polyamine portion having 10 or 12 CH2 chains.

3. An air conditioning system according to any preceding claims, **characterized in that** said first elastomeric material comprises a polymer selected from the group consisting of natural rubber, polychloroprene, acrylonitrile-butadiene (NBR) and related hydrogenated elastomers known as hydrogenated acrylonitrile-butadiene (HNBR) or hydrogenated acrylonitrile-butadiene zinc salts grafted with unsaturated carboxylic acid esters, polyisoprene, styrene-butadiene rubbers, ethylene-alpha-olefins elastomers, EPDM, polyurethane, fluorine elastomers, ethylene-acrylic elastomers (AEM), bromo butyl, chlorosulfonated polyethylene (CSM) or alkyl-chlorosulfonate, chlorinated polyethylene, epoxidized natural rubber, SBR, carboxylated NBR, carboxylated HNBR, ACM and mixtures of these compounds.

4. An air conditioning system according to any preceding claims, **characterized in that** said first elastomeric material comprises EPDM.

5. An air conditioning system according to claim 3, **characterized in that** said first elastomeric material comprises bromobutyl.

6. An air conditioning system according to claims 4 or 5, **characterized in that** said first elastomeric material comprises CSM.

7. An air conditioning system according to any claims 4 to 6, **characterized in that** said first elastomeric material comprises a vulcanization agent.

8. An air conditioning system according to any preceding claims, **characterized in that** between said first inner layer (8) and said second layer (9) an adhesive material is present.

9. An air conditioning system according to any preceding claims, **characterized in that** said reinforcement material (10) is a reinforcement yarn (10) comprising fibers of a material selected from the group consisting of aromatic polyamide, polyester, PVA, rayon.

10. An air conditioning system according to claim 1, **characterized in that** said fourth cover layer (11) comprises a second elastomeric material comprising a polymer selected from the group consisting of natural rubber, polychloroprene, acrylonitrile-butadiene (NBR) and related hydrogenated elastomers known as hydrogenated acrylonitrile-butadiene (HNBR) or hydrogenated acrylonitrile-butadiene zinc salts grafted with unsaturated carboxylic acid esters, polyisoprene, styrene-butadiene rubbers, ethylene-alpha-olefins elastomers, EPDM, polyurethane, fluorine elastomers, ethylene-acrylic elastomers (AEM), bromo butyl, chlorosulfonated polyethylene (CSM), or alkyl-chlorosulfonate, chlorinated polyethylene, epoxidized natural rubber, SBR, carboxylated NBR, carboxylated HNBR, ACM and mixtures of these compounds.

11. An air conditioning system according to claim 10, **characterized in that** said second elastomeric material comprises EPDM.

12. An air conditioning system according to any preceding claims, **characterized in that** said second layer has a thickness greater than 1 mm.

## Patentansprüche

1. Klimaanlage eines Fahrzeugs, umfassend Tetrafluorpropen als Kühlfluid, wobei das System einen mehrschichtigen Schlauch (7), Tetrafluorpropen und ein PAG-Öl umfasst, mindestens umfassend:
- eine erste innere Schicht (8) bestehend aus PPA
- eine zweite Schicht (9) äußerlich der ersten Schicht, umfassend ein erstes elastomeres Material;
- eine dritte Schicht (10) äußerlich der zweiten Schicht, umfassend ein Verstärkungsgarn;
- eine vierte Schicht (11) äußerlich des Verstärkungsgarns mit einem zweiten elastomeren Material

2. Klimaanlage nach Anspruch 1, **dadurch gekennzeichnet, dass** das PPA einen Polyaminanteil mit 10 oder 12 CH2-Ketten umfasst.

3. Klimaanlage nach einem der vorstehenden Ansprüche, **dadurch gekennzeichnet, dass** das erste elastomere Material ein Polymer umfasst, ausgewählt aus der Gruppe bestehend aus Naturkautschuk, Polychloropren, Acrylnitril-Butadien (NBR) und verwandten hydrierten Elastomeren, bekannt als hydriertes Acrylnitril-Butadien (HNBR) oder hydrierte Acrylnitril-Butadien-Zinksalze, gepfropft mit ungesättigten Carbonsäureestern, Polyisopren, Styrol-Butadien-Kautschuke, Ethylen-alpha-Olefin-Elastomere, EPDM, Polyurethan, Fluorelastomere, Ethylen-Acryl-Elastomere (AEM), Brombutyl, chlorsulfoniertes Polyethylen (CSM) oder Alkylchlorsulfonat, chloriertes Polyethylen, epoxidierter Naturkautschuk, SBR, carboxylierter NBR, carboxylierter HNBR, ACM und Mischungen dieser Verbindungen.

4. Klimaanlage nach einem der vorstehenden Ansprüche, **dadurch gekennzeichnet, dass** das erste elastomere Material EPDM umfasst.

5. Klimaanlage nach Anspruch 3, **dadurch gekennzeichnet, dass** das erste elastomere Material Brombutyl umfasst.

6. Klimaanlage nach Anspruch 4 oder 5, **dadurch gekennzeichnet, dass** das erste elastomere Material CSM umfasst.

7. Klimaanlage nach den Ansprüchen 4 bis 6, **dadurch gekennzeichnet, dass** das erste elastomere Material ein Vulkanisationsmittel enthält.

8. Klimaanlage nach einem der vorstehenden Ansprüche, **dadurch gekennzeichnet**, das s zwischen der ersten inneren Schicht (8) und der zweiten Schicht (9) ein Klebemittel vorhanden ist.

9. Klimaanlage nach einem der vorstehenden Ansprüche, **dadurch gekennzeichnet, dass** das Verstärkungsmaterial (10) ein Verstärkungsgarn (10) ist, umfassend Fasern aus einem Material, ausgewählt aus der Gruppe bestehend aus aromatischem Polyamid, Polyester, PVA, Rayon.

10. Klimaanlage nach Anspruch 1,
**dadurch gekennzeichnet, dass** die vierte Deckschicht (11) ein zweites elastomeres Material umfasst, umfassend ein Polymer, ausgewählt aus der Gruppe bestehend aus Naturkautschuk, Polychloropren, Acrylnitril-Butadien (NBR) und verwandten hydrierten Elastomeren, bekannt als hydriertes Acrylnitril-Butadien (HNBR) oder hydrierte Acrylnitril-Butadien-Zinksalze, gepfropft mit ungesättigten Carbonsäureestern, Polyisopren, Styrol-Butadien-Kautschuke, Ethylen-alpha-Olefin-Elastomere, EPDM, Polyurethan, Fluorelastomere, Ethylen-Acryl-Elastomere (AEM), Brombutyl, chlorsulfoniertes Polyethylen (CSM) oder Alkylchlorsulfonat, chloriertes Polyethylen, epoxidierter Naturkautschuk, SBR, carboxylierter NBR, carboxylierter HNBR, ACM und Mischungen dieser Verbindungen.

11. Klimaanlage nach Anspruch 10,
**dadurch gekennzeichnet, dass** das zweite elastomere Material EPDM umfasst.

12. Klimaanlage nach einem der vorstehenden Ansprüche, **dadurch gekennzeichnet, dass** die zweite Schicht eine Dicke von mehr als 1 mm aufweist.

## Revendications

1. Système de climatisation d'un véhicule comprenant du tétrafluoropropène en tant que fluide de refroidissement, ledit système comprenant un tuyau multicouche (7), du tétrafluoropropène et de l'huile PAG, comprenant au moins :
- une première couche interne (8) qui est constituée par du PPA ;
- une deuxième couche (9) qui est externe par rapport à la première couche et qui comprend un premier matériau élastomérique ;
- une troisième couche (10) qui est externe par rapport à la deuxième couche et qui comprend un fil de renfort ; et
- une quatrième couche (11) qui est externe par rapport au fil de renfort et qui comprend un second matériau élastomérique.

2. Système de climatisation selon la revendication 1, **caractérisé en ce que** ledit PPA comprend une partie de polyamine qui comporte 10 ou 12 chaînes CH₂.

3. Système de climatisation selon l'une quelconque des revendications précédentes, **caractérisé en ce que** ledit premier matériau élastomérique comprend un polymère qui est sélectionné parmi le groupe qui est constitué par le caoutchouc naturel, le polychloroprène, l'acrylonitrile-butadiène (NBR) et les élastomères hydrogénés afférents qui sont connus en tant qu'acrylonitrile-butadiène hydrogéné (HNBR) ou les sels de zinc acrylonitrile-butadiène hydrogéné qui sont greffés avec des esters d'acide carboxylique non saturés, le polyisoprène, les caoutchoucs styrène-butadiène, les élastomères éthylène-alpha-oléfines, l'EPDM, le polyuréthane, les élastomères fluorés, les élastomères éthylène-acrylique (AEM), le bromobutyle, le polyéthylène chlorosulfoné (CSM) ou le chlorosulfonate d'alkyle, le polyéthylène chloré, le caoutchouc naturel époxydé, le SBR, le NBR carboxylaté, le HNBR carboxylaté, l'ACM et des mélanges de ces composés.

4. Système de climatisation selon l'une quelconque des revendications précédentes, **caractérisé en ce que** ledit premier matériau élastomérique comprend de l'EPDM.

5. Système de climatisation selon la revendication 3, **caractérisé en ce que** ledit premier matériau élastomérique comprend du bromobutyle.

6. Système de climatisation selon la revendication 4 ou 5, **caractérisé en ce que** ledit premier matériau élastomérique comprend du CSM.

7. Système de climatisation selon l'une quelconque des revendications 4 à 6, **caractérisé en ce que** ledit premier matériau élastomérique comprend un agent de vulcanisation.

8. Système de climatisation selon l'une quelconque des revendications précédentes, **caractérisé en ce que**, entre ladite première couche interne (8) et ladite deuxième couche (9), un matériau adhésif est présent.

9. Système de climatisation selon l'une quelconque des revendications précédentes, **caractérisé en ce que** ledit matériau de renfort (10) est un fil de renfort (10) qui comprend des fibres en un matériau qui est sélectionné parmi le groupe qui est constitué par le polyamide aromatique, le polyester, le PVA et la rayonne.

10. Système de climatisation selon la revendication 1, **caractérisé en ce que** ladite quatrième couche de recouvrement (11) comprend un second matériau élastomérique qui comprend un polymère qui est sélectionné parmi le groupe qui est constitué par le caoutchouc naturel, le polychloroprène, l'acrylonitrile-butadiène (NBR) et les élastomères hydrogénés afférents qui sont connus en tant qu'acrylonitrile-butadiène hydrogéné (HNBR) ou les sels de zinc acrylonitrile-butadiène hydrogéné qui sont greffés avec des esters d'acide carboxylique non saturés, le polyisoprène, les caoutchoucs styrène-butadiène, les élastomères éthylène-alpha-oléfines, l'EPDM, le polyuréthane, les élastomères fluorés, les élastomères éthylène-acrylique (AEM), le bromobutyle, le polyéthylène chlorosulfoné (CSM) ou le chlorosulfonate d'alkyle, le polyéthylène chloré, le caoutchouc naturel époxydé, le SBR, le NBR carboxylaté, le HNBR carboxylaté, l'ACM et des mélanges de ces composés.

11. Système de climatisation selon la revendication 10, **caractérisé en ce que** ledit second matériau élastomérique comprend de l'EPDM.

12. Système de climatisation selon l'une quelconque des revendications précédentes, **caractérisé en ce que** ladite deuxième couche présente une épaisseur supérieure à 1 mm.
